# EUROPEAN PATENT SPECIFICATION

(11) **EP 1 103 431 B1**
(45) Date of publication and mention of the grant of the patent: **29.08.2007**
(21) Application number: 00500249.8
(22) Date of filing: 23.11.2000
(51) Int. Cl.: B60R 21/20

(54) **Device for positioning and fastening an airbag module cover**
Anordnung für die Einstellung und die Befestigung einer Airbagmodul-Abdeckung
Dispositif de positionnement et de fixation d'un module de coussin gonflable

(30) Priority: 23.11.1999 ES 9902967 U
(43) Date of publication of application: 30.05.2001
(73) Proprietor: Dalphi Metal Espana, S.A., 28006 Madrid (ES)
(72) Inventor: Gras Tous, Luis, 28006 Madrid (ES)
(74) Representative: Martinez Diez, Luis Roberto

(56) References cited:
- EP-A- 0 832 793
- DE-U- 29 805 207
- PATENT ABSTRACTS OF JAPAN vol. 2000, no. 01, 31 January 2000 (2000-01-31) & JP 11 268651 A (NIPPON PLAST CO LTD), 5 October 1999 (1999-10-05)

## Description

### BACKGROUND OF THE INVENTION

The present specification refers to a device for positioning an airbag module cover, the purpose of which is to achieve a fastened position independently of the fitting-up of the module in question, acting, at the the same time, as a cover fastening.

### FIELD OF THE INVENTION

The present invention will find application in industry dedicated to the manufacture of motorcars, more specifically, in industry dedicated to the manufacture of steering wheels and safety accessories for same.

### PRIOR ART

US-A-5 410 114 discloses a positioning and fastening arrangement of an airbag device and two horn plates on a steering wheel frame, wherein each horn plate comprises two insertion holes and two locking holes, each insertion hole receiving a corresponding guide pin fastened to a plate connected to the steering wheel frame, the bag holder of the airbag device comprising two downwardly extending locking legs on each side, which engage with the locking holes in each of the horn plates to temporarily secure the air bag device to the horn plate before securing a further nut and bolt attachment.

DE-U-29805207 discloses a movable mounting arrangement of an airbag module in a steering wheel in which recesses provided on the underside of the airbag module cover accommodate mounting studs secured to the steering wheel frame, each mounting stud extending through a through-hole in a movable mounting tab acting as a horn plate to which the airbag module is rigidly connected, such that the airbag module cover can be precisely oriented in a plane perpendicular to the steering wheel axis whilst being movable parallel to the steering wheel axis for actuating the horn contacts.

JP 11268651 discloses a horn plate installation on a steering wheel.

EP 832793 discloses a snap-mounted air bag cover

However, the applicant is not aware of the existence at present of a mechanism, arrangement or device providing a selfpositioning of a cover with regard to the steering wheel and to achieve, at the same time, fastening thereof in relation to the horn plate, and, accordingly a total positioning with regard to the steering wheel.

### SUMMARY OF THE INVENTION

The positioning and fastening arrangement of an airbag module and two horn plates on a steering wheel frame as proposed by the invention has the features mentioned in Claim 1.

The positioning arrangement of the airbag module cover as proposed by the invention, is configured per se as an appreciable novelty in its specific field of application, being configured as a cover positioning in relation to the horn plate and, in its turn, as a fastening thereto, so obtaining a positioning and a fastening of the cover in only one assembly.

In a more specific way, the positioning arrangement of the airbag module cover is configured starting from the fact of having, in the inner part, four housings adopting a hollow cylinder configuration intended for being fitted into four cylindrical bushings, joined to the steering wheel frame, so securing its positioning.

Two lower housings present a configuration lightly oval and flattened by a plane acting as a stop, while two upper housings, also oval, will impede any displacement in an opposed sense.

In order to secure the positioning, and, also, the cover fastening, four pawls, opposed two by two, have been provided, which will fit into two housings located in the horn plate, thereby fastening the cover on the remaining shaft.

### DESCRIPTION OF THE DRAWINGS

In order to complement this description and aid a better understanding of the characteristics of the invention, the appended sheet of drawings, which is a part of this specification, shows, by way of illustrative and non-limiting example, the following:

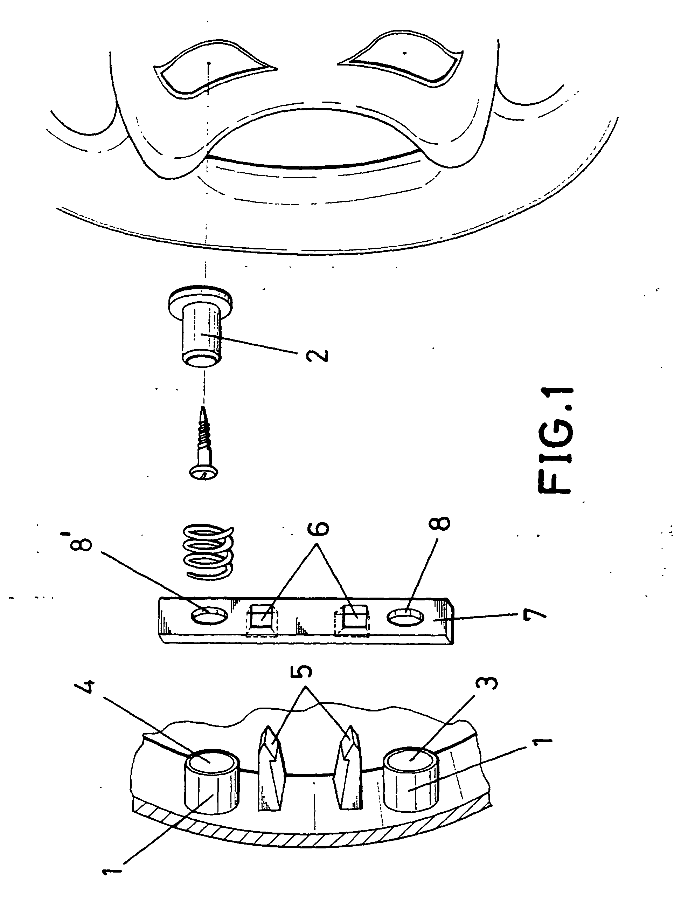

Figure 1 corresponds to a view of the invention, corresponding to a positioning arrangement of the airbag module cover.

### DESCRIPTION OF THE PREFERRED EMBODIMENT OF THE INVENTION

From figure 1, alone, it can be seen that the positioning arrangement of the airbag module cover of the invention is constituted starting from the fact of placing, on the airbag cover, in its inner part, four housings (1) intended for receiving four cylindrical bushings (2), these cylindrical bushings (2) being joined to the steering wheel frame, thus securing their positioning.

The two lower housings presenting an inner portion (3) have an appropriate configuration to achieve the aim pursued, that is to say, they are not totally cylindrical but slightly oval and flattened by a plane acting as a stop.

Likewise, the upper bushings (1) presenting inner portions (4), are also oval, so impeding, in the same way, any displacement.

In order to secure a positioning, and also to achieve a fastening of the cover, four pawls (5), opposed two by two, have being provided, intended for being inserted into the housings (6) placed in the horn plate (7), thus obtaining a fastening of the cover.

The horn plate has two perforations (8, 8') at the ends, the invention also presenting springs and screws, to be applied in a conventional way.

It is not considered necessary to extend this description for any expert in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. Positioning and fastening arrangement of an airbag module cover and two horn plates (7) on a steering wheel frame, wherein:
a) each horn plate (7), comprises two housings (6) and two perforations (8, 8'), each perforation (8, 8') receiving one of four cylindrical bushings (2) fastened to the steering wheel frame;
b) two pairs of hollow housings (1) are located on an inner part of the airbag module cover and a pair of opposing pawls (5) are arranged between each pair of hollow housings (2), the airbag module cover being positioned on the steering wheel frame by inserting said four cylindrical bushings (2) into said four hollow housings (1) and being fastened to said horn plates (7) by inserting said pawls (5) into said housings (6) in each horn plate (7).

2. Positioning and fastening arrangement of an airbag module and two horn plates (7) on a steering wheel frame according to claim 1, **characterized in that** the inner zone of said hollow housings (1) has an oval shaped section.

## Patentansprüche

1. Positionier- und Befestigungsanordnung einer Airbagmodulabdeckung und zweier Hupenplatten (7) an einem Lenkradrahmen, wobei:
a) jede Hupenplatte (7) zwei Aufnahmen (6) und zwei Löcher (8,8') aufweist, von denen jede eine von vier an dem Lenkradrahmen befestigten zylindrischen Buchsen (2) aufnimmt;
b) zwei Paar Hohlgehäuse (1) an einem Innenteil der Airbagmodulabdeckung angeordnet sind und ein Paar einander gegenüberliegender Sperrklinken (5) zwischen jedem Hohlgehäuse-Paar (1) angeordnet ist, wobei die Airbagmodulabdeckung durch Einsetzen der vier zylindrischen Buchsen (2) in die vier Hohlgehäuse (1) an dem Lenkradrahmen positioniert ist und durch Einrasten der Sperrklinken (5) in die in jeder Hupenplatte (7) ausgebildeten Aufnahmen (6) an den Hupenplatten (7) befestigt ist.

2. Positionier- und Befestigungsanordnung einer Airbagmodulabdeckung und zweier Hupenplatten (7) an einem Lenkradrahmen nach Anspruch 1, **dadurch gekennzeichnet, dass** die Innenzone der Hohlgehäuse (1) einen ovalen Querschnitt aufweist.

## Revendications

1. Dispositif de positionnement et de fixation d'un couvercle de module de coussin gonflable et de deux plaques d'avertisseur sonore (7) sur un cadre de volant de direction, dans lequel :
a) chaque plaque d'avertisseur sonore (7) comprend deux logements (6) et deux trous (8, 8'), chaque trou (8, 8') recevant l'un de quatre douilles cylindriques (2) fixées au cadre de volant de direction ;
b) deux paires de logements creux (1) sont situées sur une partie interne du couvercle du module de coussin gonflable et une paire de doigts d'encliquetage en opposition (5) sont placés entre chaque paire de logements creux (2), le couvercle du module de coussin gonflable étant positionné sur le cadre de volant de direction par insertion desdits quatre douilles cylindriques (2) dans lesdits quatre logements creux (1) et étant fixé auxdites plaques d'avertisseur sonore (7) par insertion desdits doigts d'encliquetage (5) dans lesdits logements (6) dans chaque plaque d'avertisseur sonore (7).

2. Dispositif de positionnement et de fixation d'un module de coussin gonflable et de deux plaques d'avertisseur sonores (7) sur un cadre de volant de direction selon la revendication 1, **caractérisé en ce que** la zone interne desdits logements creux (1) a une section de forme ovale.
